# FASCICULE DE BREVET EUROPEEN

(11) **EP 2 832 154 B1**
(45) Date de publication et mention de la délivrance du brevet: **08.08.2018**
(21) Numéro de dépôt: 13720446.7
(22) Date de dépôt: 28.03.2013
(51) Int. Cl.: H04L 12/701, H04W 84/18, H04L 29/08, H04W 40/20

(54) **PROCEDE ET EQUIPEMENT DE ROUTAGE POUR COMMUNICATION ENTRE VEHICULES**
VERFAHREN UND LEITWEGLENKVORRICHTUNG FÜR DIE KOMMUNIKATION ZWISCHEN FAHRZEUGEN
METHOD AND ROUTING APPARATUS FOR COMMUNICATION BETWEEN VEHICLES

(30) Priorité: 29.03.2012 FR 1252840
(43) Date de publication de la demande: 04.02.2015
(73) Titulaire: ORANGE SA, 75015 Paris (FR)
(72) Inventeur: BODIN, Pascal, F-06130 Grasse (FR)
(74) Mandataire: Fontenelle, Sandrine
(86) Numéro de dépôt international: PCT/FR2013/050686
(87) Numéro de publication internationale: WO 2013/144520

(56) Documents cités:
- US-B1- 6 256 579
- ILIAS LEONTIADIS ET AL: "Extending Access Point Connectivity through Opportunistic Routing in Vehicular Networks", INFOCOM, 2010 PROCEEDINGS IEEE, IEEE, PISCATAWAY, NJ, USA, 14 mars 2010 (2010-03-14), pages 1-5, XP031675067, ISBN: 978-1-4244-5836-3
- ILIAS LEONTIADIS ET AL: "GeOpps: Geographical Opportunistic Routing for Vehicular Networks", WORLD OF WIRELESS, MOBILE AND MULTIMEDIA NETWORKS, 2007. WOWMOM 2007. IEEE INTERNATIONAL SYMPOSIUM ON A, IEEE, PI, 1 juin 2007 (2007-06-01), pages 1-6, XP031149130, ISBN: 978-1-4244-0992-1
- MIGUEL GARCIA DE LA FUENTE ET AL: "Performance analysis of position-based routing approaches in VANETS", MOBILE WIRELESS COMMUNICATIONS NETWORKS, 2007 9TH IFIP INTERNATIONAL CONFERENCE ON, IEEE, PISCATAWAY, NJ, USA, 19 septembre 2007 (2007-09-19), pages 16-20, XP031359245, ISBN: 978-1-4244-1719-3
- "Intelligent Transport Systems (ITS); Vehicular communications; GeoNetworking; Part 4: Geographical addressing and forwarding for point-to-point and point-to-multipoint communications; Sub-part 1: Media-Independent Functionality", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ITS WG3, no. V1.1.1, 1 June 2011 (2011-06-01), XP014065694,

## Description

### Arrière-plan de l'invention

L'invention se rapporte au domaine général des télécommunications. L'invention concerne en particulier un protocole de routage pour un réseau ad-hoc permettant une communication entre véhicules.

Depuis plusieurs années, de nombreux travaux concernent les systèmes de transport intelligents (ITS pour « *Intelligent Transport System* »). En particulier, il a été proposé de réaliser un réseau ad-hoc permettant une communication entre véhicules, grâce à des stations ITS embarquées. Les applications de la communication entre véhicules sont notamment l'échange d'informations concernant la sécurité routière, la remontée de données du véhicule pour une maintenance préventive, la remontée d'information d'utilisation du véhicule pour une facturation d'assurance basée sur l'usage, la remontée de données de trajet du véhicule pour un paiement d'une écotaxe ou d'un péage urbain, etc.

Compte tenu des spécificités de ces applications, il a été proposé de baser le fonctionnement d'un tel réseau sur une technologie appelée geonetworking, dans lequel l'adressage et le routage sont basés sur la position géographique du ou des destinataires, contrairement à un réseau classique qui utilise des adresses réseaux, par exemple des adresses IP. L'ETSI (European Télécommunications Standards Institute) donne la définition suivante du geonetworking : « Un service de réseau qui utilise des positions géographiques et fournit des communications ad-hoc sans nécessiter une infrastructure de coordination des communications ».

Le document Spécifications Techniques TS 102 636-4-1 de l'ETSI décrit une pile de protocoles appelée GeoNetworking. Une des structures de données utilisées dans ces protocoles est appelée la table des localisations (« *location table* » en anglais).

Chaque entrée de la table des localisations correspond à une station ITS, soit pour laquelle une demande de localisation est en cours, soit pour laquelle la localisation est connue. Chaque entrée a une durée de vie, fixée à 20 secondes par défaut. Lorsque cette durée de vie est atteinte, l'entrée est supprimée de la table.

Une entrée contient les informations suivantes : l'adresse (au sens réseau GeoNetworking) de la station ITS concernée, l'adresse niveau liaison de donnée de la station, son type (véhicule ou bord de route), son vecteur de position (position, vitesse, cap, horodatage de la position, précision de la position, précision de la vitesse, précision du cap), un indicateur booléen indiquant si une demande de localisation est en cours ou non, un indicateur booléen indiquant si la station ITS est en voisinage direct, le numéro de séquence du dernier paquet reçu de cette station.

Lorsqu'une station ITS source a besoin d'envoyer un message à une station ITS destination, il est nécessaire de connaître la localisation géographique de la station destination. Si cette information n'est pas disponible dans la table des localisations, la station source lance une demande de localisation. Celle-ci va se propager conformément au protocole utilisé, jusqu'à atteindre la station destination. Cette dernière va alors répondre à la station source, en lui fournissant sa localisation.

Par ailleurs, chaque station ITS diffuse de façon régulière sa position, à destination de ses voisines. La période de diffusion par défaut est fixée à 3 secondes.

Chaque entrée de la table des localisations est créée et/ou mise à jour en fonction des demandes de services des couches supérieures, et des communications avec les autres stations ITS. Ainsi, par exemple, une demande d'envoi d'un message de données vers une station ITS n'ayant pas encore d'entrée correspondante dans la table des localisations va provoquer le démarrage d'une demande de localisation (qui va s'effectuer selon le mécanisme présenté ci-dessus), et la création d'une entrée dans la table des localisations, pour la station concernée, pour laquelle l'indicateur booléen correspondant indique qu'une demande de localisation est en cours. Lors la réponse à la demande de localisation est reçue, l'indicateur est positionné pour indiquer que la localisation a été reçue, et le vecteur de position de la station est mis à jour.

De même, lorsqu'un paquet est reçu d'une station ITS voisine, ou qu'un paquet émis par une station ITS voisine est reçu pour être transféré vers une autre station ITS, l'entrée de la table des localisations correspondant à la station ITS émettrice du paquet est mise à jour, remplaçant le vecteur de position existant par le vecteur de position contenu dans le paquet, si ce dernier est plus récent.

La mise à jour d'une entrée de la table des localisations remet à 0 la durée de vie associée.

Les algorithmes de routage GeoNetworking reposent sur le contenu de la table des localisations pour router les paquets de station ITS à station ITS.

Le contenu de la table des localisations est relativement local à la station ITS concernée, puisqu'il provient majoritairement des échanges avec les stations ITS voisines. Par ailleurs, dans les situations où les véhicules dans lesquels sont installées les stations ITS ont des parcours peu corrélés (typiquement : en-dehors des autoroutes et des routes nationales), les entrées décrivant les stations ITS voisines disparaissent rapidement de la table des localisations, les véhicules concernés s'éloignant les uns des autres.

La quantité et la pertinence des informations contenues dans la table des localisations sont donc limitées. Il existe donc un besoin pour une amélioration du routage d'un paquet de données dans un réseau basé sur le geonetworking.

Le document de I. Leontiadis et al. intitulé « Extending Access Point Connectivity through Opportunistic Routing in Vehicular Networks », INFOCOM 2010, 14 mars 2010, propose un procédé de routage pour un réseau adhoc hybride permettant une communication entre véhicules et points d'accès.

Le document de I. Leontiadis et al. intitulé « GeOpps : Geographical Opportunistic Routing for Vehicular Networks », WOWMOM 2007, 1er juin 2007, présente un protocole de routage qui exploite à la fois la nature opportuniste et les caractéristiques inhérente d'un réseau adhoc de véhicules ainsi que l'information géographique présente dans les systèmes de navigation des véhicules.

Le document de M. Garcia de la Fuente et al. intitulé « Performance analysis of position-based routing approaches in VANETS » présente une analyse de performance de deux protocoles de routage basés sur la localisation.

### Objet et résumé de l'invention

L'invention propose un procédé de routage mis en oeuvre par un équipement formant un noeud d'un réseau composé de plusieurs noeuds, comprenant :
- une étape de réception ou de génération d'un message incluant des données de position géographique de destination représentant la position géographique d'un noeud de destination du message, et
- une étape de transmission du message vers un noeud voisin, sélectionné parmi plusieurs noeuds voisins en fonction de la position géographique de destination et d'une table des localisations, la table des localisations incluant la position géographique d'au moins un noeud voisin.

Ce procédé de routage est remarquable en ce qu'il comprend :
- une étape de réception, de la part d'un noeud voisin embarqué dans un premier véhicule, de données de trajet représentant un trajet planifié dudit premier véhicule, et
- une étape de mise à jour de ladite table des localisations en fonction desdites données de trajet.

Corrélativement, l'invention propose un équipement apte à former un noeud d'un réseau composé de plusieurs noeuds, comprenant :
- des moyens de réception ou de génération d'un message incluant des données de position géographique de destination représentant la position géographique d'un noeud de destination du message, et
- des moyens de transmission du message vers un noeud voisin, sélectionné parmi plusieurs noeuds voisins en fonction de la position géographique de destination et d'une table des localisations, la table des localisations incluant la position géographique d'au moins un noeud voisin.

Cet équipement est remarquable en ce qu'il comprend :
- des moyens de réception, de la part d'un noeud voisin embarqué dans un premier véhicule, de données de trajet représentant un trajet planifié du premier véhicule, et
- des moyens de mise à jour de la table des localisations en fonction des données de trajet.

De manière correspondante, l'invention propose un procédé de routage mis en oeuvre par un équipement formant un noeud d'un réseau composé de plusieurs noeuds, l'équipement étant embarqué dans un véhicule, le procédé de routage comprenant :
- une étape de réception ou de génération d'un message incluant des données de position géographique de destination représentant la position géographique d'un noeud de destination du message, et
- une étape de transmission du message vers un noeud voisin, sélectionné parmi plusieurs noeuds voisins en fonction de ladite position géographique de destination et d'une table des localisations, la table des localisations incluant la position géographique d'au moins un noeud voisin.

Ce procédé de routage est remarquable en ce qu'il comprend :
- une étape de réception de données de trajet représentant un trajet planifié du véhicule, et
- une étape de transmission desdites données de trajet vers un noeud voisin.

Corrélativement, l'invention propose un équipement apte à former un noeud d'un réseau composé de plusieurs noeuds, l'équipement étant destiné à être embarqué dans un véhicule et comprenant :
- des moyens de réception ou de génération d'un message incluant des données de position géographique de destination représentant la position géographique d'un noeud de destination du message, et
- des moyens de transmission dudit message vers un noeud voisin, sélectionné parmi plusieurs noeuds voisins en fonction de ladite position géographique de destination et d'une table des localisations, ladite table des localisations incluant la position géographique d'au moins un noeud voisin.

Cet équipement est remarquable en ce qu'il comprend :
- des moyens de réception de données de trajet représentant un trajet planifié du véhicule, et
- des moyens de transmission desdites données de trajet vers un noeud voisin.

L'invention se rapporte donc à plusieurs produits ayant un lien entre eux, à savoir un équipement qui transmet des données de trajet, et un équipement qui reçoit et utilise les données de trajet transmises. Bien entendu, un même équipement peut réaliser les deux fonctions.

Grâce à la transmission de données de trajets entre équipements et à la mise à jour de la table des localisations en fonction des trajets planifiés, un équipement peut disposer, dans sa table des localisations, d'un nombre beaucoup plus grand de localisations des autres équipements, et sur une durée beaucoup plus longue (qui peut être celle de la durée restant à courir de chaque trajet). Ainsi, lorsque la table des localisations est utilisée pour router le message reçu, le routage peut être plus pertinent. De plus, le fait de disposer d'un nombre plus important de localisations dans la table des localisations permet de diminuer le nombre de demandes de localisation nécessaires.

Selon un mode de réalisation, l'étape de mise à jour de ladite table des localisations comprend :
- une étape de mémorisation des données de trajet reçues dans une table des trajets planifiés, la table des trajets planifiés incluant des données de trajets d'au moins un noeud voisin, et
- une étape d'actualisation de la table des localisations, en fonction d'au moins une position déterminée en fonction de la table des trajets planifiés.

La table des trajets planifiés permet de mémoriser les données de trajet de manière indépendante de la table des localisations, qui peut donc être conforme par exemple au protocole GeoNetworking.

Selon un mode de réalisation, le procédé de routage comprend :
- une étape de réception d'un deuxième message incluant des données de position géographique de source représentant la position géographique d'un noeud de source du deuxième message,
- une étape de comparaison des données de position géographique de source avec une position dudit noeud de source déterminée en fonction de la table des trajets planifiés, et
- si l'étape de comparaison indique une différence, une étape de suppression des données de trajet correspondant audit noeud de source de la table des trajets planifiés.

Cela permet de donner la priorité à la position reçue par rapport aux positions déterminées à partir de la table des trajets planifiés, et notamment de tenir compte d'un changement de trajet.

L'équipement peut être embarqué dans un deuxième véhicule et relié à un dispositif de planification apte à transmettre des deuxièmes données de trajet représentant un trajet planifié dudit deuxième véhicule, le procédé comprenant :
- une étape de réception desdites deuxièmes données de trajet dudit dispositif de planification, et
- une étape de transmission desdites deuxièmes données de trajet vers un noeud voisin.

Dans ce cas, l'équipement manipule donc à la fois des données de trajet reçues d'autres équipements et ses propres données de trajet qu'il envoie vers les autres équipements.

Les données de trajet peuvent comprendre des données décrivant des positions successives, chaque position étant associée à un temps de passage relatif à un temps de départ, et des données décrivant une pluralité d'heures de départ.

Cela permet de réduire la taille des données de trajets à transmettre et mémoriser.

L'étape de réception peut comprendre la réception d'une pluralité de données de trajet représentant une pluralité de trajets planifiés du véhicule, et l'étape de transmission peut comprendre la transmission d'un sous-ensemble desdites données de trajet vers un noeud voisin.

Cela permet également de réduire la quantité de données à transmettre et mémoriser.

L'invention vise aussi un programme d'ordinateur comportant des instructions pour l'exécution des étapes d'un procédé de routage conforme à l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un réseau comprenant des équipements conformes à l'invention,
- la figure 2 représente l'architecture matérielle d'un équipement de la figure 1, et
- les figures 3 à 6 représentent les principales étapes d'un procédé de routage mis en oeuvre par un équipement de la figure 1.

### Description détaillée d'un mode de réalisation

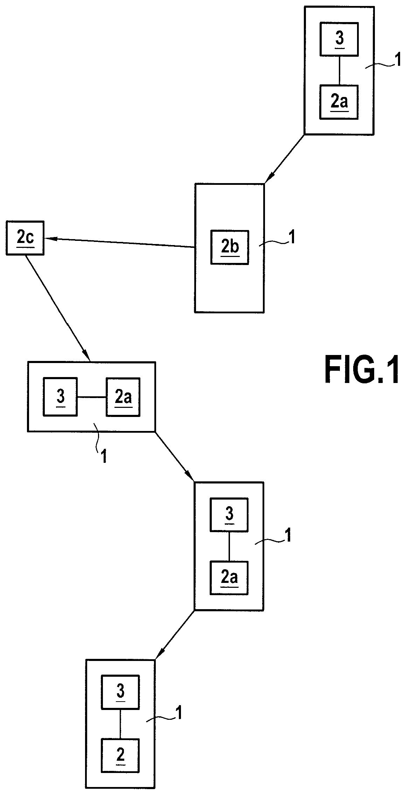

La **figure 1** représente un ensemble d'équipements 2 formant les noeuds d'un réseau sans fil. On note équipement 2a un équipement embarqué dans un véhicule 1 équipé d'un dispositif de planification 3, équipement 2b un équipement embarqué dans un véhicule 1 qui n'est pas équipé d'un dispositif de planification 3, et équipement 2c un équipement fixe, qui n'est pas embarqué dans un véhicule 1. Ci-après, on utilise la référence 2 pour désigner un équipement 2a, 2b ou 2c lorsqu'il n'est pas nécessaire de faire la distinction.

Les équipements 2 ont une double fonction. Premièrement, chaque équipement 2 comprend une station ITS qui génère et/ou collecte des données relatives au véhicule 1 et/ou à son environnement, et qui peut décider de transmettre certaines de ces données vers une destination, par exemple un ou plusieurs autres véhicules 1. Deuxièmement, chaque équipement 2 comprend un routeur qui forme un noeud d'un réseau ad-hoc basé sur le geonetworking. Le routeur est intégré dans la station ITS ou communique avec cette station.

Ainsi, un véhicule 1 source peut transmettre un paquet de données vers un véhicule 1 destination, par l'intermédiaire de véhicules 1 de transit et éventuellement d'équipements 2c fixes, comme représenté par des flèches sur la figure 1. A cet effet, l'équipement 2 du véhicule 1 source émet un paquet de données qui contient, dans un champ de destination, la position géographique du véhicule 1 destination. Cette position géographique peut par exemple être indiquée conformément au protocole GeoNetworking cité en introduction. Lorsqu'un équipement 2 reçoit un tel paquet de donnée, il le transmet vers un noeud voisin conformément à un procédé de routage qui sera décrit ultérieurement, jusqu'à ce que le paquet atteigne le noeud de destination.

Par ailleurs, certains véhicules 1 comprennent également un dispositif de planification 3. Le dispositif de planification 3 est capable de fournir des données de trajet représentant au moins un trajet planifié du véhicule 1 dans lequel il est embarqué. Le dispositif de planification 3 est par exemple, dans un véhicule 1 particulier, un dispositif d'aide à la navigation. Dans un véhicule 1 de transport en commun, il peut d'agir du SAEIV (Système d'aide à l'Exploitation et d'Information Voyageur). Dans un taxi, il peut s'agir du système d'attribution et de suivi des courses clients.

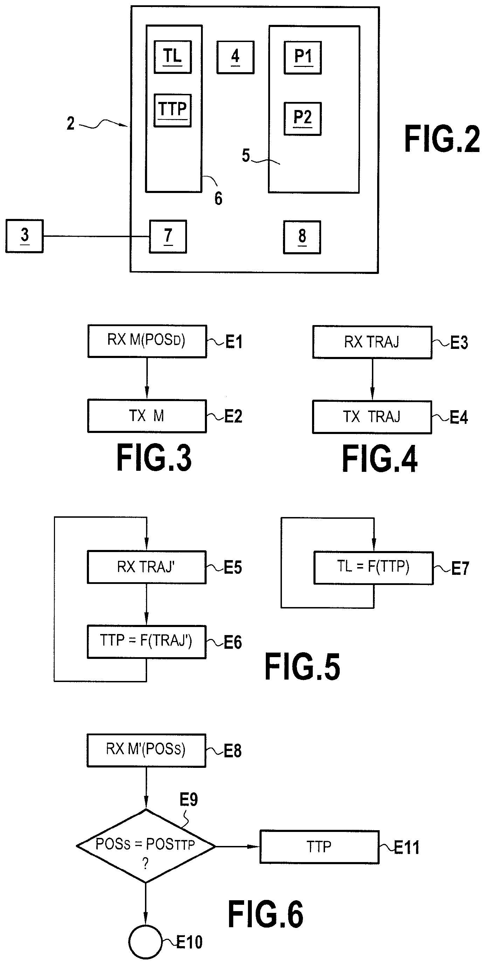

La **figure 2** représente l'architecture matérielle d'un équipement 2 dans un mode de réalisation. L'équipement 2 présente l'architecture matérielle d'un ordinateur et comprend notamment un processeur 4, une mémoire non-volatile 5, une mémoire volatile 6 et une interface de communication 8. Au moins dans le cas d'un équipement 2a embarqué dans un véhicule 1 comprenant un dispositif de planification 3, l'équipement 2 comprend également une interface de communication 7.

Le processeur 4 permet d'exécuter des programmes d'ordinateur mémorisés dans la mémoire non-volatile 5, en utilisant la mémoire volatile 6 comme mémoire de travail. Dans le mode de réalisation représenté, la mémoire non-volatile 5 mémorise un programme P1 et un programme P2. Le fonctionnement de l'équipement 2 comme station ITS résulte de l'exécution du programme P1 et le fonctionnement de l'équipement 2 comme routeur résulte de l'exécution du programme P2. Les programmes P1 et P2 peuvent être exécutés en parallèle. Lorsque le routeur est intégré dans la station ITS, les programmes P1 et P2 peuvent être des parties d'un seul et même logiciel.

Dans un autre mode de réalisation, l'équipement 2 comprend deux dispositifs distincts présentant chacun l'architecture matérielle d'un ordinateur, l'un réalisant la fonction de station ITS et l'autre celle de routeur.

Un équipement 2a est relié, par l'intermédiaire de son interface de communication 7, au dispositif de planification 3. L'équipement 2a peut donc recevoir des données provenant du dispositif de planification 3, par exemple par une liaison série, une liaison Bluetooth, etc. Le dispositif de planification 3 est capable de fournir à l'équipement 2 notamment des données de trajet représentant un trajet planifié du véhicule 1. Les données de trajet comprennent par exemple une suite de segments rectilignes géoréférencés et horodatés.

Un équipement 2a ou 2b peut également obtenir une position courante du véhicule 1 dans lequel il est embarqué, par exemple du dispositif de planification 3 ou d'un autre dispositif de positionnement externe ou interne.

Enfin, l'interface de communication 8 permet de transmettre des paquets de données sur une liaison sans fils vers un autre équipement 2 voisin.

Chaque équipement 2 mémorise, par exemple dans sa mémoire volatile 6, une table des localisations TL et une table des trajets planifiés TTP.

En fonctionnement, la table des localisations TL inclut - sauf si le véhicule concerné n'a croisé encore aucun véhicule et n'a pas eu besoin de communiquer - la position géographique d'au moins un équipement 2 voisin. Par exemple, la table des localisations TL est conforme aux protocoles GeoNetworking. Dans ce cas, chaque entrée de la table des localisations TL correspond à un équipement 2, soit pour laquelle une demande de localisation est en cours, soit pour laquelle la localisation est connue. Chaque entrée a une durée de vie, fixée à 20 secondes par défaut. Lorsque cette durée de vie est atteinte, l'entrée est supprimée de la table. Une entrée contient les informations suivantes : l'adresse (au sens réseau GeoNetworking) de l'équipement 2 concerné, l'adresse niveau liaison de donnée de l'équipement 2, son type (équipement 2a ou 2b embarqué dans un véhicule 1 ou équipement 2c fixe de bord de route), son vecteur de position (position, vitesse, cap, horodatage de la position, précision de la position, précision de la vitesse, précision du cap), un indicateur booléen indiquant si une demande de localisation est en cours ou non, un indicateur booléen indiquant si l'équipement 2 est en voisinage direct, le numéro de séquence du dernier paquet reçu de cet équipement 2.

La table des trajets planifiés TTP inclut des données de trajet TRAJ provenant d'autres équipements 2. Chaque entrée de la table des trajets planifiés TTP correspond à un équipement 2 et contient par exemple les informations suivantes : l'adresse (au sens réseau GeoNetworking) de l'équipement 2 concerné par le trajet, l'adresse niveau liaison de donnée de l'équipement 2, son type (équipement 2a ou 2b embarqué dans un véhicule 1 ou équipement 2c fixe de bord de route), un numéro d'identification du trajet, une description du trajet, les date et heure de création de ce trajet. La description du trajet peut être réalisée selon différentes variantes décrites ultérieurement.

La **figure 3** représente des étapes d'un procédé de routage mis en oeuvre par un équipement 2.

A l'étape E1, l'équipement 2 reçoit un paquet de données M incluant, dans un champ de destination, des données de position géographique POS_{D} d'une destination. La destination est par exemple l'équipement 2a ou 2b d'un autre véhicule 1, un ensemble d'équipements 2 se trouvant dans une zone géographique déterminée, un équipement 2c fixe, etc. Dans le cas d'un équipement 2 jouant le rôle de noeud intermédiaire, le paquet de données M est reçu par l'interface de communication 8 en provenance d'un autre noeud du réseau. Dans le cas de l'équipement 2 du véhicule 1 source, le paquet de données M est un message interne à l'équipement 2, généré par la partie station ITS et transmis par la partie station ITS à la partie routeur de l'équipement 2.

Ensuite, à l'étape E2, l'équipement 2 transmet le paquet de données M, par l'interface de communication 8, vers un noeud voisin sélectionné parmi plusieurs noeuds voisins en fonction de la position géographique POS_{D} de la destination et de la table des localisations TL, conformément à un procédé de routage prédéterminé. Le procédé de routage de l'étape E2 est par exemple un des procédés du protocole GeoNetworking cité en introduction. Le noeud voisin peut être la destination si celle-ci se trouve à portée ou un noeud de transit.

La **figure 4** représente des étapes d'un procédé de routage mis en oeuvre par un équipement 2a, c'est-à-dire un équipement embarqué dans un véhicule 1 équipé d'un dispositif de planification 3.

A l'étape E3, l'équipement 2a reçoit des données de trajet TRAJ représentant un trajet planifié du véhicule 1 dans lequel il est embarqué. Comme expliqué précédemment, les données de trajet TRAJ sont fournies par le dispositif de planification 3. Il peut s'agir d'un trajet en cours ou à venir.

Les données de trajet TRAJ comprennent également un numéro d'identification du trajet qui est créé par l'équipement 2a, de façon à identifier de façon unique chaque nouveau trajet fourni par le dispositif de planification 3. Une relation d'ordre est définie dans la suite des numéros d'identification pour un équipement 2a donné. On peut par exemple tout simplement choisir un entier incrémenté pour chaque nouveau trajet (avec retour à 0 une fois arrivé à la valeur maximale, bien entendu). En variante, on peut utiliser une durée écoulée entre une date référence et l'instant de création du numéro d'identification.

Ensuite, à l'étape E4, l'équipement 2a transmet les données de trajet TRAJ vers au moins un noeud voisin, qui peut être un équipement 2a, 2b ou 2c.

La **figure 5** représente des étapes d'un procédé de routage mis en oeuvre par un équipement 2.

A l'étape E5, l'équipement 2 reçoit, de la part d'un équipement 2a voisin, des données de trajet TRAJ'. Contrairement au cas de l'étape E3 de la figure 4, les données de trajet TRAJ' ne représentent pas un trajet planifié du véhicule 1 dans lequel est embarqué l'équipement 2 qui met en oeuvre les étapes de la figure 5. Au contraire, les données de trajet TRAJ' représentent un trajet planifié d'un autre véhicule 1, à savoir du véhicule 1 qui embarque l'équipement 2a voisin ayant envoyé les données de trajet TRAJ' reçues.

Ensuite, à l'étape E6, la table des trajets planifiés TTP est mise à jour en fonction des données de trajets TRAJ' reçues. Concrètement, l'équipement 2 crée ou met à jour l'entrée de sa table des trajets planifiés TTP qui correspond à l'équipement 2a ayant émis les données de trajet TRAJ'.

Parallèlement, à l'étape E7, l'équipement 2 met à jour la table des localisations TL en fonction de la table des trajets planifiés TTP. L'étape E7 est par exemple effectuée de manière périodique et/ou en réponse à une mise à jour de la table des trajets planifiés TTP. Par exemple, l'étape E7 est répétée selon une période correspondant à la durée de vie prédéfinie des entrées de la table des localisations TL.

Concrètement, pour chaque trajet TRAJ' de la table des trajets planifiés TTP correspondant à un équipement 2a ne se trouvant pas dans la table des localisations TL, l'équipement 2 détermine la localisation dans le trajet correspondant à l'heure courante, à partir des informations de description du trajet. Si cette position existe, elle est ajoutée dans la table des localisations TL.

Pour déterminer la localisation dans un trajet correspondant à l'heure courante, il suffit de parcourir la suite des positions décrivant le trajet, jusqu'à atteindre une position dont l'heure est immédiatement supérieure à l'heure courante. Cette position (ou la précédente) peut être utilisée pour mettre à jour la table des localisations TL. En variante, si la description du trajet est faite sous forme d'une suite de segments (avec l'heure de passage à chaque extrémité connue donc), on peut appliquer une simple règle de trois pour déterminer une localisation sur le segment concerné, correspondant exactement à l'heure donnée. Selon une autre variante, si l'on dispose d'une base de données cartographiques, on peut être encore plus précis, en prenant en compte les segments de voirie.

Grâce à la transmission de données de trajets TRAJ entre équipements 2, à la mémorisation d'une table des trajets planifiés TTP et à la mise à jour de la table des localisations TL en fonction de la table des trajets planifiés TTP, un équipement 2 peut disposer, dans sa table des localisations TL, d'un nombre beaucoup plus grand de localisations des autres équipements 2, et sur une durée beaucoup plus longue (qui est celle de la durée restant à courir de chaque trajet). Ainsi, lorsque la table des localisations TL est utilisée à l'étape E2 pour router un message M, le routage peut être plus pertinent.

De plus, le fait de disposer d'un nombre plus important de localisations dans la table des localisations TL permet de diminuer le nombre de demandes de localisation. Le niveau de diminution dépend en grande partie du type de services ayant besoin de communiquer. Par exemple, deux véhicules 1 partant d'un même point, allant dans des directions différentes, et dont les conducteurs se connaissent et désirent garder le contact par une application de babillage (chat), profiteront au mieux de cette optimisation.

Bien entendu, la table des localisations TL est également mise à jour en fonction des messages incluant la position d'un équipement 2. Les informations des messages de position diffusés par équipements 2 sont prioritaires par rapport aux informations provenant de la table des trajets planifiés TTP.

Cela est réalisé par exemple selon les étapes représentées sur la **figure 6****,** qui sont mise en oeuvre par un équipement 2 recevant un message M' de position d'un autre équipement 2. Lorsqu'un message M' de position d'un équipement 2 est reçu (étape E8), et que l'équipement 2 à l'origine du message reçu est déjà mentionnée dans la table des localisations TL de l'équipement 2 de réception, ce dernier vérifie s'il existe un trajet planifié dans sa table des trajets planifiés TTP, pour l'équipement 2 à l'origine du message, pour l'heure courante. Si c'est le cas, l'équipement 2 de réception détermine si la localisation actuelle POS de l'équipement 2 à l'origine du message correspond à la localisation POS_{TTP} déduite de la table des trajets planifiés TTP (étape E9). Par exemple, on vérifie si la distance entre les deux positions est inférieure à un seuil prédéterminé. Si c'est le cas, l'équipement 2 de réception ne change rien (étape E10). Si ce n'est pas le cas, l'équipement 2 de réception efface le trajet planifié correspondant à l'équipement 2 à l'origine du message M' de sa table des trajets planifiés TTP (étape E11).

Les étapes E1 à E11 des figures 3 à 6 correspondent par exemple à l'exécution, en parallèle, de plusieurs modules logiciels du programme P2 précité par un équipement 2. Les étapes E3 et E4 de la figure 4 concernent uniquement un équipement 2a relié à un dispositif de planification 3. Un équipement 2a manipule donc à la fois des données de trajet reçues d'autres équipement et ses propres données de trajet qu'il envoie vers les autres équipements.

Comme expliqué précédemment, la description d'un trajet peut se faire de plusieurs façons : suite de positions avec espacement régulier dans le temps, espacement régulier dans l'espace, un mélange des deux (pour suivre au mieux les segments de voirie lorsque le véhicule ralentit par exemple), les vrais segments de voirie (typiquement lorsqu'une cartographie numérique est embarquée), etc. Il est possible également de diminuer la quantité de données pour chaque position intermédiaire, par exemple en n'utilisant que la différence de position d'avec la position précédente et la différence de temps d'avec l'heure de la position précédente, au lieu d'utiliser une position absolue et une heure absolue.

Les données de trajets représentent des positions successives qui ne sont pas toutes alignées dans la même direction. Autrement dit, un simple vecteur de vitesse instantanée ne constitue pas une description d'un trajet planifié.

Pour un équipement 2a installée dans un véhicule 1 effectuant des trajets répétitifs sur une longue période de temps (typiquement, un bus de transport en commun), les données de trajet TRAJ diffusée aux autres équipements 2 voisins peuvent contenir la description du trajet en question, avec un horodatage effectué par exemple par rapport à l'heure de départ du premier trajet de la journée, et la liste des heures des départs suivants sur la journée. Cette optimisation permet de diminuer à la fois le volume des diffusions effectuées par chaque équipement 2a vers ses voisins, et le volume de la table des trajets planifiés TTP à mémoriser, en modifiant son format de façon à supporter cette optimisation.

Lorsqu'un véhicule 1 possède un grand nombre de trajets planifiés par avance, l'équipement 2a peut faire le choix de ne diffuser que le ou les trajets sur une période à venir limitée (par exemple une heure). L'équipement 2a peut également décider de n'accepter de la part du dispositif de planification 3 que le ou les trajets sur une période à venir limitée (par exemple une heure). Dans ce cas, l'équipement 2a redemande au dispositif de planification 3 les trajets suivants, lorsque le moment est venu.

Un trajet planifié peut ne pas être suivi par le véhicule 1 correspondant, par exemple suite à l'initiative du conducteur, ou suite à la détection d'un retard ou d'une avance du véhicule, ou suite à une proposition de changement de trajet fournie par un autre service et acceptée par le conducteur. Il est possible d'en tenir compte de plusieurs façons, éventuellement complémentaires:
- la durée de vie d'une entrée dans la table des trajets planifiés TTP est fixée à une durée plus courte que la durée du trajet (par exemple 20 minutes). La probabilité que le véhicule change de trajet sur cette durée est plus faible.
- on affecte un coefficient de crédibilité à chaque entrée de la table des trajets planifiés TTP, en fonction du type de véhicule 1 effectuant le trajet. Par exemple, ce coefficient peut avoir une valeur très forte pour des bus de transports en commun. Il peut également avoir une valeur très forte pour un véhicule pour lequel les trajets sont rarement modifiés, ce qui peut être détecté par un auto-apprentissage au niveau de l'équipement 2. La durée de vie de l'entrée dans la table des trajets planifiés TTP dépend de ce coefficient de crédibilité.
- lorsqu'un trajet est modifié, l'équipement 2a du véhicule 1 concerné s'en rend compte par exemple parce que le dispositif de planification 3 lui indique explicitement (au niveau du protocole applicatif entre le dispositif de planification 3 et l'équipement 2a), ou parce que l'équipement 2a constate que le nouveau trajet qu'il reçoit est défini pour un créneau horaire pour lequel il avait déjà un trajet planifié. L'équipement 2a attribue à ce trajet modifié un nouveau numéro d'identification. Lorsqu'un équipement 2 reçoit les informations de trajet planifié d'un équipement pour lequel il a déjà un trajet planifié sur tout ou partie du créneau horaire concerné, il compare les deux numéros d'identification, et ne conserve que le trajet ayant le numéro d'identification le plus élevé. Si le trajet reçu concerne une période couverte en tout ou partie par plusieurs trajets de la table des trajets planifiés, tous les trajets dont le numéro d'identification est inférieur à celui reçu sont supprimés de la table des trajets planifiés.

## Revendications

1. Procédé de routage mis en oeuvre par un équipement (2a, 2b, 2c) formant un noeud d'un réseau composé de plusieurs noeuds, comprenant :
- une étape (E1) de réception ou de génération d'un message (M) incluant des données de position géographique de destination (POS_{D}) représentant la position géographique d'un noeud de destination du message (M), et
- une étape (E2) de transmission dudit message (M) vers un noeud voisin, sélectionné parmi plusieurs noeuds voisins en fonction de ladite position géographique de destination (POS_{D}) et d'une table des localisations (TL), ladite table des localisations (TL) incluant la position géographique d'au moins un noeud voisin,
**caractérisé en ce qu'**il comprend :
- une étape (E5) de réception, de la part d'un noeud voisin (2a) embarqué dans un premier véhicule (1), de données de trajet (TRAJ') représentant un trajet planifié dudit premier véhicule (1), et
- une étape de mise à jour de ladite table des localisations (TL) en fonction desdites données de trajet (TRAJ').

2. Procédé de routage selon la revendication 1, dans lequel ladite étape de mise à jour de ladite table des localisations (TL) comprend :
- une étape (E6) de mémorisation des données de trajet (TRAJ') reçues dans une table des trajets planifiés (TTP), ladite table des trajets planifiés (TTP) incluant des données de trajets d'au moins un noeud voisin (2a), et
- une étape (E7) d'actualisation de la table des localisations (TL), en fonction d'au moins une position déterminée en fonction de la table des trajets planifiés (TTP).

3. Procédé de routage selon la revendication 2, comprenant :
- une étape (E8) de réception d'un deuxième message (M') incluant des données de position géographique de source (POS_{S}) représentant la position géographique d'un noeud de source du deuxième message (M'),
- une étape (E9) de comparaison des données de position géographique de source (POS_{S}) avec une position (POS_{TTP}) dudit noeud de source déterminée en fonction de la table des trajets planifiés (TTP), et
- si l'étape (E9) de comparaison indique une différence, une étape (E11) de suppression des données de trajet (TRAJ') correspondant audit noeud de source de la table des trajets planifiés (TTP).

4. Procédé de routage selon la revendication 1, dans lequel ledit équipement (2a) est embarqué dans un deuxième véhicule (1) et relié à un dispositif de planification (3) apte à transmettre des deuxièmes données de trajet (TRAJ) représentant un trajet planifié dudit deuxième véhicule (1), le procédé comprenant :
- une étape (E3) de réception desdites deuxièmes données de trajet (TRAJ) dudit dispositif de planification (3), et
- une étape (E4) de transmission desdites deuxièmes données de trajet (TRAJ) vers un noeud voisin (2).

5. Programme d'ordinateur comportant des instructions pour l'exécution des étapes d'un procédé de routage selon la revendication 1 lorsque ledit programme est exécuté par un ordinateur.

6. Support d'informations lisible par un ordinateur, et comportant des instructions d'un programme d'ordinateur selon la revendication 5.

7. Equipement (2a, 2b, 2c) apte à former un noeud d'un réseau composé de plusieurs noeuds, comprenant :
- des moyens de réception ou de génération d'un message (M) incluant des données de position géographique de destination (POS_{D}) représentant la position géographique d'un noeud de destination du message (M), et
- des moyens de transmission dudit message (M) vers un noeud voisin, sélectionné parmi plusieurs noeuds voisins en fonction de ladite position géographique de destination (POS_{D}) et d'une table des localisations (TL), ladite table des localisations (TL) incluant la position géographique d'au moins un noeud voisin,
**caractérisé en ce qu'**il comprend :
- des moyens de réception, de la part d'un noeud voisin (2a) embarqué dans un premier véhicule (1), de données de trajet (TRAJ') représentant un trajet planifié dudit premier véhicule (1), et
- des moyens de mise à jour de ladite table des localisations (TL) en fonction desdites données de trajet (TRAJ').

8. Procédé de routage mis en oeuvre par un équipement (2a) formant un noeud d'un réseau composé de plusieurs noeuds, ledit équipement étant embarqué dans un véhicule (1), le procédé de routage comprenant :
- une étape (E1) de réception ou de génération d'un message (M) incluant des données de position géographique de destination (POS_{D}) représentant la position géographique d'un noeud de destination du message (M), et
- une étape (E2) de transmission dudit message (M) vers un noeud voisin, sélectionné parmi plusieurs noeuds voisins en fonction de ladite position géographique de destination (POS_{D}) et d'une table des localisations (TL), ladite table des localisations (TL) incluant la position géographique d'au moins un noeud voisin,
**caractérisé en ce qu'**il comprend :
- une étape (E3) de réception de données de trajet (TRAJ) représentant un trajet planifié du véhicule (1), et
- une étape (E4) de transmission desdites données de trajet (TRAJ) vers un noeud voisin.

9. Procédé de routage selon la revendication 8, dans lequel lesdites données de trajet (TRAJ) comprennent des données décrivant des positions successives, chaque position étant associée à un temps de passage relatif à un temps de départ, et des données décrivant une pluralité d'heures de départ.

10. Procédé de routage selon la revendication 8, dans lequel l'étape (E3) de réception comprend la réception d'une pluralité de données de trajet (TRAJ) représentant une pluralité de trajets planifiés du véhicule (1), et l'étape (E4) de transmission comprend la transmission d'un sous-ensemble desdites données de trajet (TRAJ) vers un noeud voisin.

11. Programme d'ordinateur comportant des instructions pour l'exécution des étapes d'un procédé de routage selon la revendication 8 lorsque ledit programme est exécuté par un ordinateur.

12. Support d'informations lisible par un ordinateur, et comportant des instructions d'un programme d'ordinateur selon la revendication 11.

13. Equipement (2a) apte à former un noeud d'un réseau composé de plusieurs noeuds, ledit équipement (2a) étant destiné à être embarqué dans un véhicule et comprenant :
- des moyens de réception ou de génération d'un message (M) incluant des données de position géographique de destination (POS_{D}) représentant la position géographique d'un noeud de destination du message (M), et
- des moyens de transmission dudit message (M) vers un noeud voisin, sélectionné parmi plusieurs noeuds voisins en fonction de ladite position géographique de destination (POS_{D}) et d'une table des localisations (TL), ladite table des localisations (TL) incluant la position géographique d'au moins un noeud voisin,
**caractérisé en ce qu'**il comprend des moyens de réception de données de trajet (TRAJ) représentant un trajet planifié du véhicule (1), et des moyens de transmission desdites données de trajet (TRAJ) vers un noeud voisin.

## Patentansprüche

1. Routingverfahren, das von einer Einrichtung (2a, 2b, 2c) durchgeführt wird, die einen Knoten eines aus mehreren Knoten bestehenden Netzes bildet, umfassend:
- einen Schritt (E1) des Empfangs oder der Erzeugung einer Nachricht (M), die Daten einer geographischen Zielposition (POS_{D}) enthält, welche die geographische Position eines Zielknotens der Nachricht (M) repräsentieren, und
- einen Schritt (E2) des Sendens der Nachricht (M) an einen benachbarten Knoten, der in Abhängigkeit von der geographischen Zielposition (POS_{D}) und von einer Lokationstabelle (TL) aus mehreren benachbarten Knoten ausgewählt wird, wobei die Lokationstabelle (TL) die geographische Position wenigstens eines benachbarten Knotens enthält, **dadurch gekennzeichnet, dass** es umfasst:
- einen Schritt (E5) des Empfangs, durch einen benachbarten Knoten (2a) an Bord eines ersten Fahrzeugs (1), von Fahrtdaten (TRAJ'), die eine geplante Fahrt des ersten Fahrzeugs (1) repräsentieren, und
- einen Schritt der Aktualisierung der Lokationstabelle (TL) in Abhängigkeit von den Fahrtdaten (TRAJ').

2. Routingverfahren nach Anspruch 1, wobei der Schritt der Aktualisierung der Lokationstabelle (TL) umfasst:
- einen Schritt (E6) der Speicherung der empfangenen Fahrtdaten (TRAJ') in einer Tabelle der geplanten Fahrten (TTP), wobei die Tabelle der geplanten Fahrten (TTP) Daten von Fahrten wenigstens eines benachbarten Knotens (2a) enthält, und
- einen Schritt (E7) der Aktualisierung der Lokationstabelle (TL) in Abhängigkeit von wenigstens einer Position, die in Abhängigkeit von der Tabelle der geplanten Fahrten (TTP) bestimmt wurde.

3. Routingverfahren nach Anspruch 2, umfassend:
- einen Schritt (E8) des Empfangs einer zweiten Nachricht (M'), die Daten einer geographischen Quellposition (POS_{S}) enthält, welche die geographische Position eines Quellknotens der zweiten Nachricht (M') repräsentieren,
- einen Schritt (E9) des Vergleichs der Daten der geographischen Quellposition (POS_{S}) mit einer Position (POS_{TTP}) des Quellknotens, die in Abhängigkeit von der Tabelle der geplanten Fahrten (TTP) bestimmt wurde, und
- falls der Schritt (E9) des Vergleichs eine Differenz anzeigt, einen Schritt (E11) der Löschung der dem Quellknoten entsprechenden Fahrtdaten (TRAJ') aus der Tabelle der geplanten Fahrten (TTP).

4. Routingverfahren nach Anspruch 1, wobei sich die Einrichtung (2a) an Bord eines zweiten Fahrzeugs (1) befindet und mit einer Planungsvorrichtung (3) verbunden ist, die in der Lage ist, zweite Fahrtdaten (TRAJ) zu senden, die eine geplante Fahrt des zweiten Fahrzeugs (1) repräsentieren, wobei das Verfahren umfasst:
- einen Schritt (E3) des Empfangs der zweiten Fahrtdaten (TRAJ) von der Planungsvorrichtung (3), und
- einen Schritt (E4) des Sendens der zweiten Fahrtdaten (TRAJ) an einen benachbarten Knoten (2).

5. Computerprogramm, welches Anweisungen für die Ausführung der Schritte eines Routingverfahrens nach Anspruch 1, wenn das Programm von einem Computer ausgeführt wird, umfasst.

6. Computerlesbarer Datenträger, welcher Anweisungen eines Computerprogramms nach Anspruch 5 umfasst.

7. Einrichtung (2a, 2b, 2c), welche geeignet ist, einen Knoten eines aus mehreren Knoten bestehenden Netzes zu bilden, umfassend:
- Mittel zum Empfang oder zur Erzeugung einer Nachricht (M), die Daten einer geographischen Zielposition (POS_{D}) enthält, welche die geographische Position eines Zielknotens der Nachricht (M) repräsentieren, und
- Mittel zum Senden der Nachricht (M) an einen benachbarten Knoten, der in Abhängigkeit von der geographischen Zielposition (POS_{D}) und von einer Lokationstabelle (TL) aus mehreren benachbarten Knoten ausgewählt wird, wobei die Lokationstabelle (TL) die geographische Position wenigstens eines benachbarten Knotens enthält,
**dadurch gekennzeichnet, dass** sie umfasst:
- Mittel zum Empfang, durch einen benachbarten Knoten (2a) an Bord eines ersten Fahrzeugs (1), von Fahrtdaten (TRAJ'), die eine geplante Fahrt des ersten Fahrzeugs (1) repräsentieren, und
- Mittel zur Aktualisierung der Lokationstabelle (TL) in Abhängigkeit von den Fahrtdaten (TRAJ').

8. Routingverfahren, das von einer Einrichtung (2a) durchgeführt wird, die einen Knoten eines aus mehreren Knoten bestehenden Netzes bildet, wobei sich die Einrichtung an Bord eines Fahrzeugs (1) befindet, wobei das Routingverfahren umfasst:
- einen Schritt (E1) des Empfangs oder der Erzeugung einer Nachricht (M), die Daten einer geographischen Zielposition (POS_{D}) enthält, welche die geographische Position eines Zielknotens der Nachricht (M) repräsentieren, und
- einen Schritt (E2) des Sendens der Nachricht (M) an einen benachbarten Knoten, der in Abhängigkeit von der geographischen Zielposition (POS_{D}) und von einer Lokationstabelle (TL) aus mehreren benachbarten Knoten ausgewählt wird, wobei die Lokationstabelle (TL) die geographische Position wenigstens eines benachbarten Knotens enthält,
**dadurch gekennzeichnet, dass** es umfasst:
- einen Schritt (E3) des Empfangs von Fahrtdaten (TRAJ), die eine geplante Fahrt des Fahrzeugs (1) repräsentieren, und
- einen Schritt (E4) des Sendens der Fahrtdaten (TRAJ) an einen benachbarten Knoten.

9. Routingverfahren nach Anspruch 8, wobei die Fahrtdaten (TRAJ) Daten, die aufeinander folgende Positionen beschreiben, wobei jede Position einer Durchfahrtzeit zugeordnet ist, die sich auf eine Abfahrtzeit bezieht, sowie Daten, die mehrere Abfahrtzeitpunkte beschreiben, umfassen.

10. Routingverfahren nach Anspruch 8, wobei der Schritt (E3) des Empfangs den Empfang mehrerer Fahrtdaten (TRAJ) umfasst, die mehrere geplante Fahrten des Fahrzeugs (1) repräsentieren, und der Schritt (E4) des Sendens das Senden einer Teilmenge der Fahrtdaten (TRAJ) an einen benachbarten Knoten umfasst.

11. Computerprogramm, welches Anweisungen für die Ausführung der Schritte eines Routingverfahrens nach Anspruch 8, wenn das Programm von einem Computer ausgeführt wird, umfasst.

12. Computerlesbarer Datenträger, welcher Anweisungen eines Computerprogramms nach Anspruch 11 umfasst.

13. Einrichtung (2a), welche geeignet ist, einen Knoten eines aus mehreren Knoten bestehenden Netzes zu bilden, wobei die Einrichtung (2a) dazu bestimmt ist, sich an Bord eines Fahrzeugs zu befinden, und umfasst:
- Mittel zum Empfang oder zur Erzeugung einer Nachricht (M), die Daten einer geographischen Zielposition (POS_{D}) enthält, welche die geographische Position eines Zielknotens der Nachricht (M) repräsentieren, und
- Mittel zum Senden der Nachricht (M) an einen benachbarten Knoten, der in Abhängigkeit von der geographischen Zielposition (POS_{D}) und von einer Lokationstabelle (TL) aus mehreren benachbarten Knoten ausgewählt wird, wobei die Lokationstabelle (TL) die geographische Position wenigstens eines benachbarten Knotens enthält,
**dadurch gekennzeichnet, dass** sie Mittel zum Empfang von Fahrtdaten (TRAJ), die eine geplante Fahrt des Fahrzeugs (1) repräsentieren, und Mittel zum Senden der Fahrtdaten (TRAJ) an einen benachbarten Knoten umfasst.

## Claims

1. Routing method implemented by an equipment item (2a, 2b, 2c) forming a node of a network made up of several nodes, comprising:
- a step (E1) of reception or of generation of a message (M) including destination geographic position data (POS_{D}) representing the geographic position of a destination node of the message (M), and
- a step (E2) of transmission of said message (M) to a neighbouring node, selected from several neighbouring nodes as a function of said destination geographic position (POS_{D}) and of a locations table (TL), said locations table (TL) including the geographic position of at least one neighbouring node,
**characterized in that** it comprises:
- a step (E5) of reception, from a neighbouring node (2a) embedded in a first vehicle (1), of route data (TRAJ') representing a scheduled route of said first vehicle (1), and
- a step of updating of said locations table (TL) as a function of said route data (TRAJ').

2. Routing method according to Claim 1, in which said step of updating of said locations table (TL) comprises:
- a step (E6) of storage of the received route data (TRAJ') in a scheduled routes table (TTP), said scheduled routes table (TTP) including route data of at least one neighbouring node (2a), and
- a step (E7) of refreshing of the locations table (TL), as a function of at least one determined position as a function of the scheduled routes table (TTP).

3. Routing method according to Claim 2, comprising:
- a step (E8) of reception of a second message (M') including source geographic position data (POS_{S}) representing the geographic position of a source node of the second message (M'),
- a step (E9) of comparison of the source geographic position data (POS_{S}) with a position (POS_{TTP}) of said source node determined as a function of the scheduled routes table (TTP), and
- if the comparison step (E9) indicates a difference, a step (E11) of deletion of the route data (TRAJ') corresponding to said source node from the scheduled routes table (TTP).

4. Routing method according to Claim 1, in which said equipment item (2a) is embedded in a second vehicle (1) and linked to a scheduling device (3) capable of transmitting second route data (TRAJ) representing a scheduled route of said second vehicle (1), the method comprising:
- a step (E3) of reception of said second route data (TRAJ) from said scheduling device (3), and
- a step (E4) of transmission of said second route data (TRAJ) to a neighbouring node (2).

5. Computer program comprising instructions for the execution of the steps of a routing method according to Claim 1 when said program is executed by a computer.

6. Computer-readable information medium, comprising instructions of a computer program according to Claim 5.

7. Equipment item (2a, 2b, 2c) capable of forming a node of a network made up of several nodes, comprising:
- means for receiving or generating a message (M) including destination geographic position data (POS_{D}) representing the geographic position of a destination node of the message (M), and
- means for transmitting said message (M) to a neighbouring node, selected from several neighbouring nodes as a function of said destination geographic position (POS_{D}) and of a locations table (TL), said locations table (TL) including the geographic position of at least one neighbouring node,
**characterized in that** it comprises:
- means for receiving, from a neighbouring node (2a) embedded in a first vehicle (1), route data (TRAJ') representing a scheduled route of said first vehicle (1), and
- means for updating said locations table (TL) as a function of said route data (TRAJ').

8. Routing method implemented by an equipment item (2a) forming a node of a network made up of several nodes, said equipment item being embedded in a vehicle (1), the routing method comprising:
- a step (E1) of reception or of generation of a message (M) including destination geographic position data (POS_{D}) representing the geographic position of a destination node of the message (M), and
- a step (E2) of transmission of said message (M) to a neighbouring node, selected from several neighbouring nodes as a function of said destination geographic position (POS_{D}) and of a locations table (TL), said locations table (TL) including the geographic position of at least one neighbouring node,
**characterized in that** it comprises:
- a step (E3) of reception of route data (TRAJ) representing a scheduled route of the vehicle (1), and
- a step (E4) of transmission of said route data (TRAJ) to a neighbouring node.

9. Routing method according to Claim 8, in which said route data (TRAJ) comprise data describing successive positions, each position being associated with a time of passage relative to a time of departure, and data describing a plurality of times of departure.

10. Routing method according to Claim 8, in which the reception step (E3) comprises the reception of a plurality of route data (TRAJ) representing a plurality of scheduled routes of the vehicle (1), and the transmission step (E4) comprises the transmission of a subset of said route data (TRAJ) to a neighbouring node.

11. Computer program comprising instructions for the execution of the steps of a routing method according to Claim 8 when said program is executed by a computer.

12. Computer-readable information medium, comprising instructions of a computer program according to Claim 11.

13. Equipment item (2a) capable of forming a node of a network made up of several nodes, said equipment item (2a) being intended to be embedded in a vehicle and comprising:
- means for receiving or generating a message (M) including destination geographic position data (POS_{D}) representing the geographic position of a destination node of the message (M), and
- means for transmitting said message (M) to a neighbouring node, selected from several neighbouring nodes as a function of said destination geographic position (POS_{D}) and of a locations table (TL), said locations table (TL) including the geographic position of at least one neighbouring node,
**characterized in that** it comprises means for receiving route data (TRAJ) representing a scheduled route of the vehicle (1), and means for transmitting said route data (TRAJ) to a neighbouring node.
